# EUROPÄISCHE PATENTSCHRIFT

(11) **EP 1 888 354 B1**
(45) Veröffentlichungstag und Bekanntmachung des Hinweises auf die Patenterteilung: **13.10.2010**
(21) Anmeldenummer: 06753711.8
(22) Anmeldetag: 18.05.2006
(51) Int. Cl.: B60D 1/06

(54) **KUGELKUPPLUNG MIT ABGEDICHTETEM ANLAGEBEREICH**
BALL-SHAPED COUPLING COMPRISING A SEALED CONTACT AREA
ATTACHE A BOULE COMPRENANT UNE ZONE D'APPUI ETANCHE

(30) Priorität: 18.05.2005 DE 102005022879
(43) Veröffentlichungstag der Anmeldung: 20.02.2008
(73) Patentinhaber: Jost-Werke GmbH & Co. KG, 63263 Neu-Isenburg (DE)
(72) Erfinder: SZCZEPANEK, Udo, 82223 Eichenau (DE)
(74) Vertreter: Trossin, Hans-Jürgen
(86) Internationale Anmeldenummer: PCT/EP2006/004727
(87) Internationale Veröffentlichungsnummer: WO 2006/122807

(56) Entgegenhaltungen:
- EP-A- 1 369 266
- DE-U1- 20 116 970
- GB-A- 300 750
- GB-A- 544 759
- GB-A- 2 251 838
- US-A- 1 889 297
- US-A- 2 297 182

## Beschreibung

Die vorliegende Erfindung betrifft eine Kugelkupplung zur Kupplung eines Zugfahrzeugs mit einem Nachlauffahrzeug, welche Kugelkupplung eine Kupplungskugel und eine mit dieser kuppelbare Kugelpfanne umfasst, die im Ankupplungszustand einen Abschnitt der Kupplungskugel umgibt und mit einer Gegenanlagefläche an einer Anlagefläche der Kupplungskugel unter Bildung eines gemeinsamen Anlagebereichs anliegt.

Gattungsgemäße Kugelkupplungen sind beispielsweise aus der DE 201 16 970 U1 und EP 1369266 bekannt. Aus dieser Druckschrift ist insbesondere bekannt, zur Verschleißminderung der Kugelkupplungsbauteile Schmierstoff in den Anlagebereich einzubringen, in welchem die Anlagefläche der Kupplungskugel und die Gegenanlagefläche der Kugelpfanne miteinander in Anlageeingriff stehen.

Nachteilig an der bekannten Kugelkupplung ist, dass auf Grund äußerer Einflüsse, wie aufgewirbelter Schmutz, Spritzwasser und dergleichen, bei der gegebenen Relativbeweglichkeit von Kugelpfanne und Kupplungskugel Verunreinigungen unerwünschterweise in den Anlagebereich gelangen können und so den dort ausgebildeten Schmierfilm beeinträchtigen oder sogar zerstören können, was wiederum zu einem erhöhten Verschleiß der Kugelkupplung führen kann.

Es ist daher Aufgabe der vorliegenden Erfindung, eine Kugelkupplung anzugeben, welche im Vergleich zum Stand der Technik eine höhere Betriebssicherheit und eine höhere Standfestigkeit erwarten lässt.

Diese Aufgabe wird erfindungsgemäß gelöst durch eine Kugelkupplung der eingangs genannten . Art, bei welcher zwischen Kupplungskugel und Kugelpfanne eine Dichtung vorgesehen ist, welche den Anlagebereich zur Außenumgebung hin abdichtet.

Mit "Anlagebereich" ist dabei jener Bereich bezeichnet, in welchem die Gegenanlagefläche der Kugelpfanne und die Anlagefläche der Kupplungskugel miteinander in Anlageeingriff sind. Der Anlagebereich ist daher im Falle einer Relativbewegung von Kugelpfanne und Kupplungskugel ortsveränderlich. Wenn in dieser Anmeldung ausgesagt ist, dass der Anlagebereich zur Außenumgebung hin abgedichtet ist, so soll dies nicht nur den Fall einer hermetischen und vollständigen Abdichtung umfassen, sondern lösungsgemäß auch jenen Fall mit einschließen, dass der Anlagebereich vor dem Eintreten von Spritzwasser und grobem Schmutz geschützt ist. Die Dichtung im Sinne der vorliegenden Erfindung kann, muss jedoch nicht, ebenso ein Austreten von Schmierstoff aus dem Anlagebereich zur Außenumgebung oder ein Eintreten eines jeglichen Fluids von der Außenumgebung in den Anlagebereich verhindern. Es reicht erfindungsgemäß aus, wenn die Dichtung in der Lage ist, Schmutz, Spritzwasser und dergleichen in nennenswertem Umfang am Eintritt in den Anlagebereich zu hindern.

Da die Kupplungskugel eine über weite Abschnitte konvex-sphärische Oberfläche aufweist und die Kugelpfanne zumindest im Bereich ihrer Gegenanlagefläche in der Regel eine konkav-teilsphärische Gestalt aufweist, kann der Anlagebereich besonders einfach und sicher gegen den unerwünschten Eintritt von Verschmutzungen geschützt werden, wenn die Dichtung längs einer Kreisbahn verläuft, so dass ihr Anlageort an einem der Bauteile: Kupplungskugel oder Kugelpfanne, eine teilringförmige Dichtbahn ist. Liegt nämlich der Anlageort der Dichtung an einem der genannten Bauteile in einer Ebene, dann ist im Falle der sphärischen oder konkavteilsphärischen Oberfläche jede Schnittlinie dieser Oberfläche mit der Ebene ein Kreis, so dass ein teilringförmiger Anlageort der Dichtung an dem jeweiligen Bauteil einen Großteil des Anlagebereichs vor dem unerwünschten Eintritt von Verschmutzungen schützen kann.

Zwar kann in Ausführungsformen vorgesehen sein, dass die Dichtung nur längs eines Teilkreises verläuft, etwa dann wenn in einem bestimmten Bereich der Kugelkupplung nicht zu erwarten ist, dass von diesem Bereich aus Verschmutzungen zur Kugelkupplung gelangen, jedoch ist bevorzugt, den Anlagebereich möglichst vollständig durch eine umlaufende Dichtung mit einer ringförmig geschlossenen Dichtbahn vor dem unerwünschten Eintritt von Verschmutzungen aus der Außenumgebung zu schützen.

Wenn von einer ebenen Dichtbahn die Rede ist, so ist damit nicht eine unendlich dünne Ebene im mathematischen Sinne gemeint. Vielmehr sollte die Ebene, in welcher die Dichtung liegt, eine gewisse Dicke aufweisen, so dass auch der Anlageort, d.h. die zuvor genannte Dichtbahn, eine gewisse Dicke aufweisen kann. Im Sinne der vorliegenden Anmeldung soll jede Dichtbahn als ringförmig geschlossen gelten, bei welcher, von einem von der Dichtbahn umschlossenen Polarkoordinatenursprung aus betrachtet, bei jeder beliebigen Winkelkoordinate die Dichtung an wenigstens einer Stelle an dem jeweiligen Bauteil anliegt. Dies bedeutet, die Dichtbahn selbst kann aus mehreren nicht verbundenen Dichtbahnabschnitten gebildet sein und kann dennoch als ringförmig geschlossen im Sinne dieser Anmeldung gelten, wenn die gesonderten Dichtbahnabschnitte in Umfangsrichtung einander überlappen oder zumindest aneinander anstoßen.

Damit die Dichtung den Anlageeingriff zwischen Anlagefläche und Gegenanlagefläche nicht behindert und dennoch ihre Schutzfunktion des Anlagebereichs möglichst gut erfüllen kann, ist es vorteilhaft, wenn der Durchmesser der Dichtbahn kleiner ist als der größte Durchmesser der Kupplungskugel.

Für eine gute Dichtwirkung ohne jegliche Beeinträchtigung des Anlageeingriffs von Anlagefläche und Gegenanlagefläche ist es bei näherer konstruktiver Ausgestaltung von Vorteil, wenn im Ankupplungszustand zwischen der Dichtung und dem Anlagebereich ein zur Dichtbahn paralleler Abschnitt der Kupplungskugel gelegen ist, welcher einen größeren Durchmesser aufweist als der Durchmesser der Dichtbahn. In diesem Falle kann nämlich die Dichtbahn zu dem größeren Durchmesser der Kupplungskugel hin abdichten, so dass ausgehend von einem Bezugs-Ankupplungszustand mit auf ebener Fahrbahn stillstehendem Zug aus Zugfahrzeug und Nachlauffahrzeug bei Relativbewegung von Kupplungskugel und Kugelpfanne sich der Anpressdruck der Dichtung gegen etwa die Kupplungskugel nur erhöht, nicht jedoch verringert. Hierdurch wird ein Mindestanlagedruck der Dichtung an die Kupplungskugel sichergestellt.

Zwar kann gemäß einer weniger bevorzugten Ausführungsform der Erfindung daran gedacht sein, die Dichtung an der Kupplungskugel mit nach radial außen weisender Dichtstelle vorzusehen, so dass dann, wenn die Kugelpfanne in Anlageeingriff mit der Kupplungskugel gebracht wird, auch die an der Kupplungskugel vorgesehene Dichtung mit ihrer Dichtstelle an einer Fläche der Kugelpfanne anliegt und so den Anlagebereich im Sinne der vorliegenden Anmeldung abdichtet. Da jedoch Kugelpfanne und Kupplungskugel im Zugbetrieb Relativbewegungen ausführen, kann es insbesondere bei größeren Nick- oder Rollbewegungen der Kugelpfanne relativ zur Kupplungskugel geschehen, dass die Kugelpfanne zumindest abschnittsweise vorübergehend außer Anlageeingriff mit der an der Kupplungskugel vorgesehenen Dichtung gerät.

Da die Kupplungskugel verglichen mit der Gegenanlagefläche der Kugelpfanne eine wesentlich größere sphärische und damit beliebig symmetrische Oberfläche aufweist, ist es zur Vermeidung einer räumlich oder/und zeitlich zumindest abschnittsweisen Anlageeingriffsstörung bevorzugt, wenn die Dichtung an der Kugelpfanne gehalten und mit dieser relativ zur Kupplungskugel bewegbar ist. Auf Grund der oben erwähnten großen Kugeloberfläche der Kupplungskugel bleibt dabei nämlich selbst bei Nick- und Rollbewegungen der Kugelpfanne relativ zur Kupplungskugel die dort vorgesehene mit nach radial innen weisender Dichtstelle an der Oberfläche der Kupplungskugel anliegende Dichtung in Anlageeingriff mit der sphärischen Oberfläche der Kupplungskugel.

Bei Anordnung der Dichtung in der Kugelpfanne ist die Dichtbahn definiert durch die Anlage der Dichtung an der Oberfläche der Kupplungskugel. Dabei kann eine besonders gute Dichtungswirkung erzielt werden, wenn die Dichtung an einem Bereich der Kupplungskugel derart anliegt, dass zumindest für einen Abschnitt der Dichtbahn, vorzugsweise für die gesamte Dichtbahn, gilt, dass ein von der Dichtbahn ausgehender Flächennormalenvektor der Kupplungskugeloberfläche eine einer jeweiligen Abheberichtung der Kugelpfanne von der Kupplungskugel entgegengesetzt gerichtete Komponente aufweist.

Mit Abheberichtung" ist dabei jene Richtung bezeichnet, in der die Kugelpfanne in der jeweils betrachteten Stellung der Kugelpfanne relativ zur Kupplungskugel von dieser abhebbar wäre. Die Abheberichtung ist also eine fest mit der Kugelpfanne gekoppelte, relativ zur Kupplungskugel ortsveränderliche Richtung.

Um die Dichtung gemäß der oben beschriebenen vorteilhaften Weiterbildung der vorliegenden Erfindung an der Kugelpfanne vorzusehen, ist es vorteilhaft, wenn diese eine ausreichende Elastizität aufweist, so dass beim Aufsetzen der Kugelpfanne auf die Kupplungskugel die Dichtung über den größten Durchmesser der Kupplungskugel gestreift werden kann, so dass sie bei Betrachtung der Kugelkupplung im oben definierten Bezugs-Ankupplungszustand mit auf ebener Fahrbahn stillstehendem Zug aus Zugfahrzeug und Nachlauffahrzeug bezogen auf einen fahrbahnparallelen größten Durchmesser der Kupplungskugel auf einer fahrbahnnäheren Seite der Kupplungskugel anliegt, während der von der Dichtung zu schützende Anlagebereich auf einer fahrbahnferneren Seite der Kupplungskugel liegt.

Diese Eigenschaft kann von der Dichtung gut erfüllt werden, wenn sie eine Dichtlippe aufweist, die in radialer Richtung verlagerbar ist. Beispielsweise kann die Dichtlippe gemäß einer bevorzugten Weiterbildung der vorliegenden Erfindung von einem Dichtungshauptkörper derart auskragen, dass sie, in einem Querschnitt betrachtet, durch Biegung um eine zur Querschnittsebene orthogonale Biegeachse in radialer Richtung verlagerbar ist.

Es sei ausdrücklich darauf hingewiesen, dass gemäß einer vereinfachten Weiterbildung der vorliegenden Erfindung auch ein einfacher O-Dichtungsring als Dichtung verwendet werden kann. Dieser erfährt jedoch im Vergleich zu der bevorzugten radial verlagerbaren Dichtlippe im Ankupplungszustand eine größere Verformung und wird daher dauerhaft stärker beansprucht.

Die Kugelpfanne umfasst in der Regel eine im Wesentlichen konkav-teilsphärische Gegenanlagefläche und weiter einen zwischen Kugelpfannenmündung und Gegenanlagefläche gelegenen Einführabschnitt. Die Anordnung der Dichtung an der Kugelpfanne ist zur Vermeidung einer Störung des Anlageeingriffs zwischen Kugelpfanne und Kupplungskugel dann bevorzugt derart vorgesehen, dass die Dichtung im Einführabschnitt angeordnet ist.

Zur Aufnahme der Dichtung kann im Einführabschnitt eine vorzugsweise umlaufende Nut in der Kugelpfanne ausgebildet sein. Die Nut kann beispielsweise in Form eines Einstichs gefertigt sein. In diese Nut kann die Dichtung sehr einfach eingelegt werden, wobei sie im eingelegten Zustand vorzugsweise von drei Seiten umgeben ist, so dass sowohl ihre radiale als auch ihre axiale Lage gut definiert ist.

Da die Dichtung mechanischer Belastung ausgesetzt ist, sollte Vorsorge dafür getroffen werden, sie im Bedarfsfall schnell austauschen zu können. Dies kann gemäß einer Ausführungsform durch die oben beschriebene umlaufende Nut geschehen. Gemäß einer alternativen oder möglicherweise zusätzlichen Ausführungsform kann dies auch dadurch erreicht werden, dass die Dichtung einen von Kupplungskugel und Kugelpfanne gesonderten Dichtungsträger umfasst, wobei der Dichtungsträger mit Befestigungsmitteln an einem der Bauteile: Kupplungskugel und Kugelpfanne, angebracht ist.

Dabei kann zur Erreichung der oben genannten Vorteile einer sicheren Dichtung des Anlagebereichs vorgesehen sein, dass die Dichtung an der Mündung der Kugelpfanne lösbar angebracht ist.

In bevorzugter konstruktiver Ausbildung kann eine sichere Anbringung der Dichtung an der Kugelpfanne beispielsweise dadurch gewährleistet sein, dass der Dichtungsträger aus Metall gebildet ist, mit einem damit, vorzugsweise durch Aufvulkanisieren, verbundenen Dichtungshauptkörper.

Zur dauerhaften Schmierung des Anlagebereichs im Betrieb der Kugelkupplung kann vorgesehen sein, dass die Gegenanlagefläche wenigstens eine Schmierstofftasche aufweist, in welcher die Oberflächenbereiche von Anlagefläche und Gegenanlagefläche im Ankupplungszustand derart mit radialem Abstand voneinander angeordnet sind, dass zwischen diesen Oberflächenbereichen Schmierstoff speicherbar ist. Derartige Schmierstofftaschen sind bereits aus der DE 201 16 970 U1 bekannt, auf deren Offenbarung im Zusammenhang mit den Schmierstofftaschen hier vollumfänglich Bezug genommen und in die vorliegende Anmeldung einbezogen wird.

Zur einfachen Versorgung des Anlagebereichs mit Schmierstoff auch im Ankupplungszustand kann vorgesehen sein, dass die Gegenanlagefläche durch eine Schmierstoffleitung im Ankupplungszustand von außen mit Schmierstoff versorgbar ist. Hierzu kann die Schmierstoffleitung einen an der Kugelpfanne vorgesehenen Schmiernippel umfassen.

Die vorliegende Erfindung wird im Folgenden anhand der beiliegenden Zeichnungen näher erläutert. Es stellt dar:
- Fig. 1: einen Querschnitt durch eine erste Ausführungsform einer erfindungsgemäßen Kugelkupplung im Ankupplungszustand und
- Fig. 2: einen in der Ansicht der Fig. 1 entsprechenden Querschnitt einer zweiten Ausführungsform einer erfindungsgemäßen Kupplung.

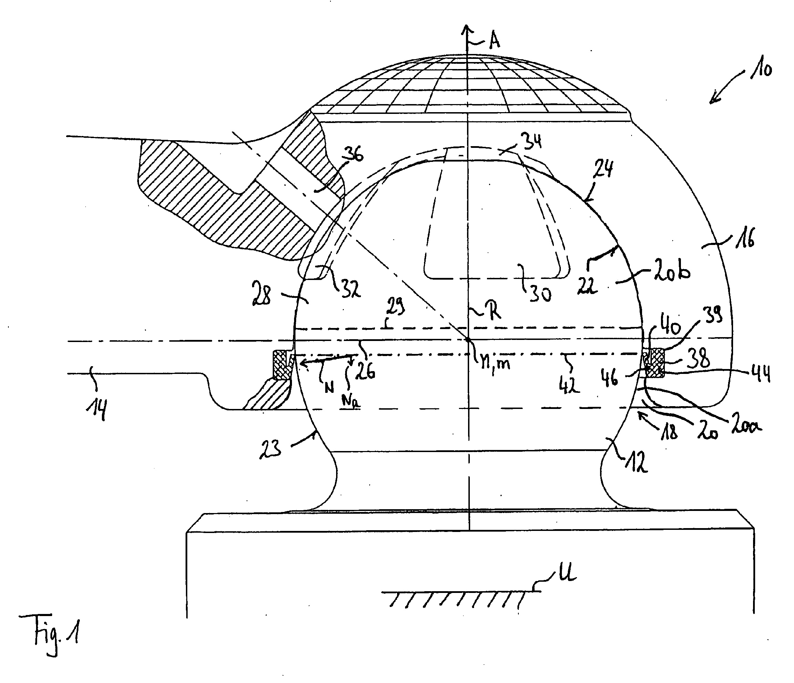

In der beiliegenden Fig. 1 ist eine erfindungsgemäße Kugelkupplung allgemein mit 10 bezeichnet. Die Kugelkupplung 10 umfasst eine üblicherweise mit einem nicht dargestellten Zugfahrzeug verbundene Kupplungskugel 12 sowie eine üblicherweise mit der Deichsel 14 eines nicht dargestellten Nachlauffahrzeugs verbundene Kugelpfanne 16.

Die Kugelpfanne 16 weist ausgehend von einer Mündung 18 eine im Wesentliche konkave Ausnehmung 20 auf. Die Ausnehmung 20 umfasst einen näher an der Mündung 18 liegenden Einführabschnitt 20a sowie einen an den Einführabschnitt 20a anschließenden konkav-teilsphärischen Kopplungsabschnitt 20b. Der konkav-teilsphärische Kopplungsabschnitt 20b weist eine im Wesentlichen teilsphärische konkave Gegenanlagefläche 22 auf, mit welcher die teilsphärische konvexe Oberfläche 23 der Kupplungskugel im Ankupplungszustand der Kugelkupplung 10 in Anlageeingriff gelangt.

Die konkav-teilsphärische Gegenanlagefläche 22 der Kugelpfanne 16 ist rotationssymmetrisch zu einer Rotationsachse R ausgebildet.

In dem in Fig. 1 gezeigten Beispiel ist die Rotationsachse R im Ankupplungszustand bei auf ebenem Untergrund U stillstehendem Zug aus Zugfahrzeug und Nachlauffahrzeug orthogonal zum Untergrund U ausgerichtet.

Weiterhin ist in Fig. 1 ein zum Untergrund U paralleler Großkreis der Kupplungskugel 12 mit 26 bezeichnet. Der Anlagebereich 28, an welchem in Fig. 1 die Gegenanlagefläche 22 der Kugelpfanne 16 in Anlage an der Anlagefläche 24 der Kupplungskugel 12 anliegt, liegt in dem in Fig. 1 gezeigten Beispiel, bezogen auf den untergrundparallelen Großkreis 26, auf der vom Untergrund U abgewandten Seite der Kupplungskugel 12 und reicht bis nahe an den untergrundparallelen Großkreis 26 heran. Die Grenze des Anlagebereichs 28 zum Untergrund U hin ist durch die Strichlinierung 29 markiert Bei einer Relativbewegung von Kugelpfanne 16 und Kupplungskugel 12 bewegt sich der Anlagebereich 28 mit der Kugelpfanne 16 mit.

In dem in Fig. 1 gezeigten Ankupplungszustand fallen der Mittelpunkt M der Kupplungskugel 12 und der Mittelpunkt m der sphärischen Gegenanlagefläche 22 der Kugelpfanne 16 idealerweise zusammen, so dass translatorisch wirkende Kräfte zwischen der Kupplungskugel 12 und der Kugelpfanne 16 in wenigstens zwei Raumrichtungen, jedoch keine Drehmomente übertragen werden können.

In der Gegenanlagefläche 22 der Kugelpfanne 16 sind sogenannte Schmierstofftaschen 30 und 32 ausgebildet, bei welchen ein Abstand zwischen der Oberfläche der Kugelpfannenausnehmung 20 und der Oberfläche 23 der Kupplungskugel 12 besteht, so dass ein zusammenhängender Hohlraum 34, zu welchem die Schmierstofftaschen 30 und 32 gehören, durch eine Schmierstoffleitung 36 von außen über einen in die Schmierstoffleitung 36 einschraubbaren nicht dargestellten Schmiernippel mit Schmierstoff versorgbar sind.

In Richtung der Symmetrieachse R mit axialem Abstand ist im Einführabschnitt 20a der Kugelpfanne eine in Umfangsrichtung umlaufende Dichtung 38 vorgesehen. Eine ebenfalls umlaufende Dichtlippe 40 liegt längs einer ringförmigen geschlossenen Dichtbahn 42 an der Kupplungskugel 12 an.

Der Durchmesser der Dichtbahn 42 ist kleiner als der Durchmesser des Großkreises 26. In der Darstellung von Fig. 1 ist die Dichtbahn 42 in der definierten Bezugsstellung ebenso wie der Großkreis 26 parallel zum Untergrund U.

Die Dichtlippe 40 steht von dem ebenfalls umlaufenden Dichtungshauptkörper 44 derart auskragend ab, dass sie bei Betrachtung im Querschnitt der Fig. 1 um eine zur Zeichen- und Querschnittsebene der Fig. 1 orthogonale Biegeachse 46 in radialer Richtung von der Symmetrieachse R weg und zu dieser hin biegbar ist. Verglichen mit dem entspannten Zustand der Dichtlippe 40 ist diese im Ankupplungszustand der Fig. 1 durch die Kupplungskugel 12 nach radial außen elastisch verlagert, so dass die Dichtlippe 40 aufgrund dieser elastischen Vorspannung an der Oberfläche 23 der Kupplungskugel 12 sicher anliegt.

Auf Grund der so gestalteten Dichtlippe 40 kann die Kugelpfanne 16 mit der Dichtung 38 sehr einfach auf die Kupplungskugel 12 aufgesetzt und von dieser abgehoben werden. Die Dichtung 38 wird auf Grund der Verformbarkeit der Dichtlippe 40 mechanisch nur gering beansprucht, so dass eine hohe Lebensdauer zu erwarten ist.

Die Abheberichtung A der Kugelpfanne 16 ist in Fig. 1 gezeigt. Sie verläuft in Richtung der Symmetrieachse R von der Kupplungskugel 12 weg. Die Abheberichtung A ist bezogen auf die Kugelpfanne 16 ortsfest und bewegt sich mit dieser relativ zur Kupplungskugel mit.

Die Dichtbahn 42 liegt an einer Stelle der Kupplungskugel derart, dass ein von der Dichtbahn 42 ausgehender Flächennormalenvektor N der Oberfläche der Kupplungskugel 12 eine der Abheberichtung A entgegengesetzte Richtungskomponente Nₐ aufweist. Dadurch ist sichergestellt, dass bei einer Relativbewegung der Kugelpfanne 16 relativ zur Kupplungskugel 12 in Abheberichtung A die Dichtungswirkung der Dichtung 38 erhöht wird, da sich dann die Dichtbahn 42 zum Großkreis 26 hin verlagert und auf Grund des größer werdenden Durchmessers der Dichtbahn 42 die elastische Verformung der Dichtlippe 40 zunimmt, so dass diese mit erhöhter Rückstellkraft gegen die Oberfläche der Kupplungskugel 12 drückt.

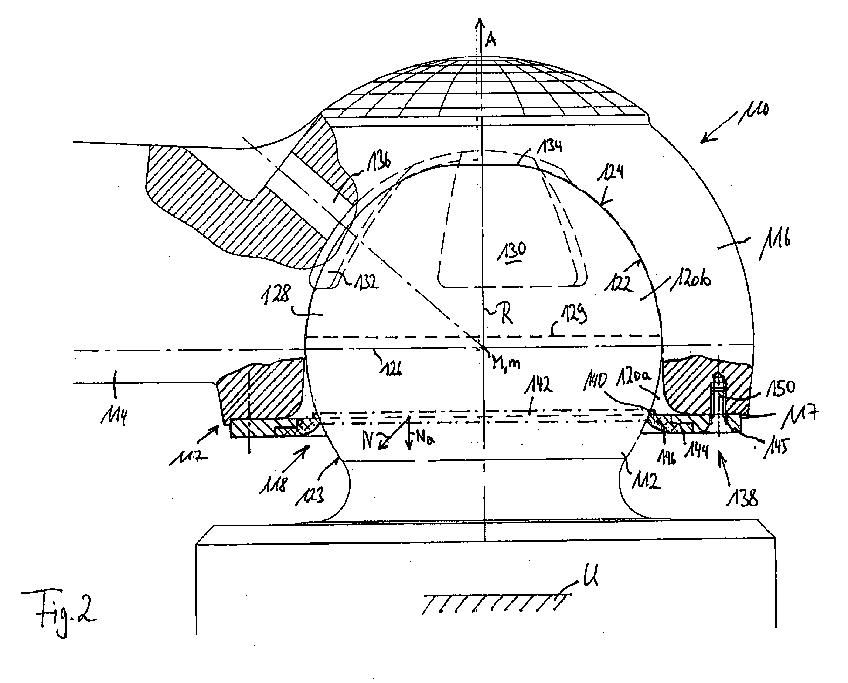

In Fig. 2 ist eine zweite Ausführungsform der vorliegenden Erfindung dargestellt. Gleiche Bauteile wie in Fig. 1 sind in Fig. 2 mit gleichen Bezugszeichen versehen, jedoch erhöht um die Zahl 100. Zur Erläuterung dieser Bauteile wird ausdrücklich auf deren Beschreibung im Zusammenhang mit Fig. 1 verwiesen. Die in Fig. 2 dargestellte Ausführungsform wird nur insofern erläutert werden, als sie sich von der Ausführungsform der Fig. 1 unterscheidet.

Während in Fig. 1 die umlaufende Dichtung 38 in eine ebenfalls umlaufende geschlossene Ringnut 39 in der Kugelpfanne 16 eingelegt ist, ist in der Ausführungsform von Fig. 2 eine Dichtung 138 an die Kugelpfanne 116 durch Schrauben 150 als Befestigungsmittel angeschraubt. Die Dichtung 138 ist dabei bei der Mündung 118 auf die Kugelpfanne 116 aufgesetzt und durch mehrere Schrauben 150 an diese angeschraubt.

Die Dichtung 138 stellt ebenfalls einen umlaufenden geschlossenen Ring dar. Die Dichtung 138 umfasst einen metallischen Ring als Dichtungsträger 145, an welchem ein Dichtungshauptkörper 144 mit einer von diesem aus in radialer Richtung zur Symmetrieachse R hin auskragenden Dichtlippe 140 aufvulkanisiert ist. Der Dichtungskörper 144 kann jedoch auch auf andere Art und Weise mit dem Dichtungsträger 145 verbunden sein, etwa durch Kleben oder/und Nieten. Der Dichtungsträger 145 ist durch ein Zentriermittel, hier durch eine umlaufende Nase 117, radial außen umgeben und bezüglich der Symmetrie R zentriert.

Während die in Fig. 1 dargestellte Dichtlippe 40 idealerweise die Oberfläche 23 der Kupplungskugel 12 längs einer linienförmigen Dichtbahn 42 berührt, liegt die Dichtlippe 140 der Dichtung 138 in Fig. 2 längs einer flächigen ringförmigen Dichtbahn 142 an der sphärischen Oberfläche 123 der Kupplungskugel 112 an. Die Dichtbahn 142 liegt wie die Dichtbahn 42 in einer in den Figuren 1 und 2 zur Symmetrieachse R der Kugelpfanne 16 bzw. 116 orthogonalen Ebene. Diese Ebene weist im Falle der Fig. 2 eine gewisse Dicke auf, nämlich eine Dicke, welche der axialen Erstreckung der Dichtbahn 142 entspricht.

Die in Fig. 2 gezeigte Dichtung 138 kann durch Lösen der Schrauben 150 sehr einfach von der Kugelpfanne 116 entfernt und durch eine neue Dichtung 138 ersetzt werden. Dadurch ist es möglich, verschlissene oder beschädigte Dichtungen mit wenigen Handgriffen zu lösen und zu ersetzen.

In der Ausführungsform von Fig. 1 kann die Dichtung 38 durch Entnahme aus der umlaufenden Nut 39 und Einlegen einer neuen Dichtung 38 in die umlaufende Nut 39 ersetzt werden.

Die Ausführungsformen der Fig. 1 und 2 können auch in Kombination angewendet werden, so dass eine erfindungsgemäße Kugelkupplung wenigstens eine Dichtung zur Abdichtung des Anlagebereichs umfasst.

Es ist nachzutragen, dass die in Fig. 1 gezeigte umlaufende Nut 39 anstatt als Einstich auch als gebaute Nut durch die Kugelpfanne und ein weiteres mit dieser verbundenes Bauteil gebildet sein kann. Dabei kann die Nut beispielsweise in zwei Richtungen durch ein Element: Kugelpfanne oder weiteres Bauteil, und in eine dritte Richtung durch das jeweils andere Element begrenzt sein.

## Patentansprüche

1. Kugelkupplung zur Kupplung eines Zugfahrzeugs mit einem Nachlauflahrzeug, welche Kugelkupplung eine Kupplungskugel (12; 112) und eine mit dieser kuppelbare Kugelpfanne (16; 116) umfasst, die im Ankupplungszustand einen Abschnitt der Kupplungskugel (12; 112) umgibt und mit einer Gegenanlagefläche (22; 122) an einer Anlagefläche (24, 124) der Kupplungskugel (12, 112) unter Bildung eines gemeinsamen Anlagebereichs (28, 128) anliegt,
wobei zwischen Kupplungskugel (12; 112) und Kugelpfanne (16; 116) eine Dichtung (38; 138) vorgesehen ist, welche den Anlagebereich (28; 128) zur Außenumgebung hin abdichtet,
**dadurch gekennzeichnet, dass** die Dichtung (38; 138) an der Kugelpfanne (16; 116) gehalten und mit dieser relativ zur Kupplungskugel (12; 112) bewegbar ist.

2. Kugelkupplung nach Anspruch 1,
**dadurch gekennzeichnet, dass** die Dichtung (38; 138) eine längs einer Kreisbahn verlaufende, vorzugsweise umlaufende Dichtung (38; 138) ist, deren Anlageort an einem der Bauteile: Kupplungskugel (12; 112) oder Kugelpfanne (16; 116), eine teilringförmige, vorzugsweise ringförmig geschlossene Dichtbahn (42; 142) ist.

3. Kugelkupplung nach Anspruch 2,
**dadurch gekennzeichnet, dass** der Durchmesser der Dichtbahn (42; 142) kleiner ist als der größte Durchmesser (26) der Kupplungskugel (12; 112).

4. Kugelkupplung nach Anspruch 3,
**dadurch gekennzeichnet, dass** im Ankupplungszustand zwischen der Dichtung (38; 138) und dem Anlagebereich (28; 128) ein zur Dichtbahn (42; 142) paralleler Abschnitt (zwischen 42; 142 und 29; 129) der Kupplungskugel (12; 112) gelegen ist, welcher einen größeren Durchmesser (26; 126) aufweist als der Durchmesser der Dichtbahn (42; 142).

5. Kugelkupplung nach Anspruch 4,
**dadurch gekennzeichnet, dass** die Dichtbahn (42; 142) durch Anlage der Dichtung (38; 138) an der Kupplungskugel (12; 112) definiert ist, wobei die Dichtung (38; 138) an einem Bereich der Kupplungskugel (12; 112) derart anliegt, dass zumindest für einen Abschnitt der Dichtbahn (42; 142), vorzugsweise für die gesamte Dichtbahn (42; 142), gilt, dass ein von der Dichtbahn (42; 142) ausgehender Flächennormalenvektor (N) der Kupplungskugeloberfläche (23; 123) eine einer jeweiligen Abheberichtung (A) der Kugelpfanne (16; 116) von der Kupplungskugel (12; 112) entgegengesetzt gerichtete Komponente (Nₐ) aufweist.

6. Kugelkupplung nach einem der vorhergehenden Ansprüche unter Einbeziehung des Anspruchs 2,
**dadurch gekennzeichnet, dass** die Dichtung (38; 138) eine im Ankupplungszustand in radialer Richtung verlagerbare Dichtlippe (40; 140) umfasst.

7. Kugelkupplung nach einem der vorhergehenden Ansprüche,
**dadurch gekennzeichnet, dass** die Kugelpfanne (16) eine im Wesentlichen konkav-teilsphärische Gegenanlagefläche (22) umfasst und weiter einen zwischen Kugelpfannenmündung (18) und Gegenanlagefläche (22) gelegenen Einführabschnitt (20a) umfasst, wobei die Dichtung (38) im Einführabschnitt (20a) angeordnet ist.

8. Kugelkupplung nach Anspruch 7,
**dadurch gekennzeichnet, dass** die Dichtung (38) in eine umlaufenden Nut (39) im Einführabschnitt (20a) eingelegt ist.

9. Kugelkupplung nach einem der vorhergehenden Ansprüche,
**dadurch gekennzeichnet, dass** die Dichtung (138) einen von Kupplungskugel (112) und Kugelpfanne (116) gesonderten Dichtungsträger (145) umfasst, wobei der Dichtungsträger (145) mit Befestigungsmitteln (150) an einem der Bauteile: Kupplungskugel (112) und Kugelpfanne (116), angebracht ist.

10. Kugelkupplung nach Anspruch 9,
**dadurch gekennzeichnet, dass** die Dichtung (138) an der Mündung (118) der Kugelpfanne (116) angebracht, vorzugsweise lösbar angebracht, ist.

11. Kugelkupplung nach Anspruch 9 oder 10,
**dadurch gekennzeichnet, dass** der Dichtungsträger (145) aus Metall gebildet ist, mit einem damit, vorzugsweise durch Aufvulkanisieren, verbundenen Dichtungshauptkörper (144).

12. Kugelkupplung nach einem der vorhergehenden Ansprüche,
**dadurch gekennzeichnet, dass** die Gegenanlagefläche (22; 122) wenigstens eine Schmierstofftasche (30, 32; 130, 132) aufweist, in welcher die Oberflächenbereiche von Anlagefläche (24; 124) und Gegenanlagefläche (22; 122) im Ankupplungszustand derart mit radialem Abstand voneinander angeordnet sind, dass zwischen diesen Oberflächenbereichen Schmierstoff speicherbar ist.

13. Kugelkupplung nach einem der vorhergehenden Ansprüche,
**dadurch gekennzeichnet, dass** die Gegenanlagefläche (22; 122) durch eine Schmierstoffleitung (36; 136) im Ankupplungszustand von außen mit Schmierstoff versorgbar ist.

14. Kugelkupplung nach Anspruch 13,
**dadurch gekennzeichnet, dass** die Schmierstoffleitung (36; 136) einen an der Kugelpfanne (16; 116) vorgesehenen Schmiernippel umfasst.

## Claims

1. A ball-shaped coupling for coupling a towing vehicle to a trailer, which ball-shaped coupling comprises a coupling ball (12; 112) and a ball socket (16; 116) which is couplable thereto and, in the coupled state, surrounds a section of the coupling ball (12; 112) and bears with an opposed bearing face (22; 112) against a bearing face (24, 124) of the coupling ball (12, 112) so as to form a common bearing area (28, 128), wherein a seal (38; 138), which seals off the bearing area (28; 128) from the surroundings, is provided between the coupling ball (12; 112) and the ball socket (16; 116), **characterized in that** the seal (38; 138) is secured to the ball socket (16; 116) and is movable with it in relation to the coupling ball (12; 112).

2. The ball-shaped coupling as claimed in claim 1, **characterized in that** the seal (38; 138) is a seal (38; 138) which extends along a circular path and is preferably circumferential, and whose bearing location against one of the components of the coupling ball (12; 112) or ball socket (16; 116) is a sealing path (42; 142) which is part annular, preferably continuous in an annular shape.

3. The ball-shaped coupling as claimed in claim 2, **characterized in that** the diameter of the sealing path (42; 142) is smaller than the largest diameter (26) of the coupling ball (12; 112).

4. The ball-shaped coupling as claimed in claim 3, **characterized in that** in the coupled state, a section (between 42; 142 and 29; 129), which is parallel to the sealing path (42; 142), of the coupling ball (12; 112) is located between the seal (38; 138) and the bearing area (28; 128) and has a larger diameter (26; 126) than the diameter of the sealing path (42; 142).

5. The ball-shaped coupling as claimed in claim 4, **characterized in that** the sealing path (42; 142) is defined by the seal (38; 138) bearing against the coupling ball (12; 112), wherein the seal (38; 138) bears against an area of the coupling ball (12; 112) in such a way that at least for a section of the sealing path (42; 142), preferably for the entire sealing path (42; 142), a surface normal vector (N), starting from the sealing path (42; 142), of the coupling ball surface (23; 123) has a component (N_{B}) which is directed in the opposite direction from a respective lifting off direction (A) of the ball socket (16; 116) from the coupling ball (12; 112).

6. The ball-shaped coupling as claimed in one of the preceding claims, including claim 2, **characterized in that** the seal (38; 138) comprises a sealing lip (40; 140) which in the coupled state is displaceable in the radial direction.

7. The ball-shaped coupling as claimed in one of the preceding claims, **characterized in that** the ball socket (16) comprises an essentially concave, part spherical opposed bearing face (22) and also an insertion section (20a) which is located between the mouth (18) of the ball socket and the opposed bearing face (22), wherein the seal (38) is arranged in the insertion section (20a).

8. The ball-shaped coupling as claimed in claim 7, **characterized in that** the seal (38) is introduced into a circumferential groove (39) in the insertion section (20a).

9. The ball-shaped coupling as claimed in one of the preceding claims, **characterized in that** the seal (138) comprises a seal carrier (145) which is separated from the coupling ball (112) and the ball socket (116), wherein the seal carrier (145) is attached with fastening means (150) to one of the components: coupling ball (112) and ball socket (116).

10. The ball-shaped coupling as claimed in claim 9, **characterized in that** the seal (138) is attached to the mouth (118) of the ball socket (116), preferably attached in a releasable fashion.

11. The ball-shaped coupling as claimed in claim 9 or 10, **characterized in that** the seal carrier (145) is formed from metal, having a seal main body (144) which is connected thereto, preferably by vulcanizing on.

12. The ball-shaped coupling as claimed in one of the preceding claims, **characterized in that** the opposed bearing face (22; 122) has at least one lubricant pocket (30, 32; 130, 132) in which the surface areas of the bearing face (24; 124) and opposed bearing face (22; 122) are arranged in the coupled state at a radial distance from one another such that lubricant is storable between these surface areas.

13. The ball-shaped coupling as claimed in one of the preceding claims, **characterized in that** in the coupled state the opposed bearing face (22; 122) can be supplied with lubricant from the outside through a lubricant line (36; 136).

14. The ball-shaped coupling as claimed in claim 13, **characterized in that** the lubricant line (36; 136) comprises a lubricating nipple which is provided on the ball socket (16; 116).

## Revendications

1. Attelage à boule pour atteler un véhicule tracteur à une remorque, lequel attelage à boule comporte une boule d'attelage (12 ; 112) et un coussinet (16 ; 116), qui est destiné à être couplé à cette dernière et qui, dans la position attelée, entoure une partie de la boule d'attelage (12 ; 112) et est en appui avec une surface d'appui complémentaire (22 ; 122) sur une surface d'appui (24, 124) de la boule d'attelage (12 ; 112) moyennant la formation d'une zone d'appui (28, 128) commune, un joint d'étanchéité (38 ; 138) étant prévu entre la boule d'attelage (12 ; 112) et le coussinet (16 ; 116) et assurant l'étanchéité de la zone d'appui (28 ; 128) par rapport à l'environnement,
**caractérisé en ce que** le joint d'étanchéité (38 ; 138) est maintenu sur le coussinet (16 ; 116) et est mobile avec celui-ci par rapport à la boule d'attelage (12 ; 112).

2. Attelage à boule selon la revendication 1, **caractérisé en ce que** le joint d'étanchéité (38 ; 138) est un joint d'étanchéité (38 ; 138) de préférence périphérique, qui s'étend le long d'une voie circulaire et dont la zone d'appui sur l'une des pièces, boule d'attelage (12 ; 112) ou coussinet (16 ; 116), est une ligne d'étanchéité (42 ; 142) en forme d'anneau partiel, de préférence en forme d'anneau fermé.

3. Attelage à boule selon la revendication 2, **caractérisé en ce que** le diamètre de la ligne d'étanchéité (42 ; 142) est inférieur au plus grand diamètre (26) de la boule d'attelage (12 ; 112).

4. Attelage à boule selon la revendication 3, **caractérisé en ce que**, dans la position attelée, il se forme, entre le joint d'étanchéité (38 ; 138) et la zone d'appui (28 ; 128), un tronçon (entre 42 ; 142 et 29 ; 129) de la boule d'attelage (12 ; 112), qui est parallèle à la ligne d'étanchéité (42 ; 142) et qui a un diamètre (26,126) supérieur au diamètre de la ligne d'étanchéité (42 ; 142).

5. Attelage à boule selon la revendication 4, **caractérisé en ce que** la ligne d'étanchéité (42 ; 142) est définie par l'appui du joint d'étanchéité (38 ; 138) sur la boule d'attelage (12 ; 112), le joint d'étanchéité (38 ; 138) étant en appui sur une zone de la boule d'attelage (12 ; 112) de telle sorte qu'au moins pour un tronçon de la ligne d'étanchéité (42 ; 142), de préférence pour la totalité de la ligne d'étanchéité (42 ; 142), il convient d'appliquer qu'un vecteur normal (N) de la surface (23 ; 123) de la boule d'attelage, lequel part de la ligne d'étanchéité (42 ; 142), possède une composante (Nₐ) orientée dans le sens opposé à une direction de relèvement (A) du coussinet (16 ; 116) à partir de la boule d'attelage (12 ; 112).

6. Attelage à boule selon l'une quelconque des revendications précédentes moyennant l'intégration de la revendication 2, **caractérisé en ce que** le joint d'étanchéité (38 ; 138) comporte une lèvre d'étanchéité (40 ; 140) qui, dans la position attelée, peut être déplacée dans la direction radiale.

7. Attelage à boule selon l'une quelconque des revendications précédentes, **caractérisé en ce que** le coussinet (16) comporte une surface d'appui complémentaire (22), sensiblement semi-sphérique concave et comporte, en outre, une partie d'introduction (20a), située entre la bouche du coussinet (18) et la surface d'appui complémentaire (22), le joint d'étanchéité (38) étant posé dans la partie d'introduction (20a).

8. Attelage à boule selon la revendication 7, **caractérisé en ce que** le joint d'étanchéité (38) est posé dans une rainure (39) périphérique dans la partie d'introduction (20a).

9. Attelage à boule selon l'une quelconque des revendications précédentes, **caractérisé en ce que** la joint d'étanchéité (138) comporte un support de joint (145) séparé de la boule d'attelage (112) et du coussinet (116), le support de joint (145) étant attaché par des moyens de fixation (150) sur l'une des pièces : boule d'attelage (112) et coussinet (116).

10. Attelage à boule selon la revendication 9, **caractérisé en ce que** le joint d'étanchéité (138) est posé au niveau de la bouche (118) du coussinet (116), de préférence de manière amovible.

11. Attelage à boule selon la revendication 9 ou 10, **caractérisé en ce que** le support de joint (145) est réalisé en métal, avec un corps principal (144), relié à celui-ci, de préférence par vulcanisation.

12. Attelage à boule selon l'une quelconque des revendications précédentes, **caractérisé en ce que** la surface d'appui complémentaire (22 ; 122) comporte au moins une poche de lubrifiant (30, 32 ; 130, 132), dans laquelle, dans la position attelée, les zones de surface de la surface d'appui (24 ; 124) et de la surface d'appui complémentaire (22 ; 122) sont disposées à distance les unes des autres, de telle sorte que le lubrifiant peut être stocké entre ces zones de surface.

13. Attelage à boule selon l'une quelconque des revendications précédentes, **caractérisé en ce que**, dans la position attelée, la surface d'appui complémentaire (22 ; 122) peut être alimentée en lubrifiant depuis l'extérieur par une conduite de lubrifiant (36 ; 136).

14. Attelage à boule selon la revendication 13, **caractérisé en ce que** la conduite de lubrifiant (36 ; 136) comporte un raccord fileté de graissage prévu sur le coussinet (16 ; 116).
